# FASCICULE DE BREVET EUROPEEN

(11) **EP 3 140 255 B1**
(45) Date de publication et mention de la délivrance du brevet: **12.06.2024**
(21) Numéro de dépôt: 15725838.5
(22) Date de dépôt: 07.05.2015
(51) Int. Cl.: C01G 9/02, C09C 1/36, C09C 1/62, C09C 1/40, C09C 1/30, C01F 17/00, C01F 7/02, C01F 5/40, C01F 5/14, C01G 1/02, C01G 3/00, C01G 51/00, C01G 53/00, C01G 49/00, C01G 3/02, C01G 49/02, C01G 25/02, C01G 25/00, C01G 23/053, C01G 23/00

(54) **PARTICULES INORGANIQUES INDIVIDUALISÉES**
INDIVIDUALISIERTE ANORGANISCHE PARTIKEL
INDIVIDUALISED INORGANIC PARTICLES

(30) Priorité: 07.05.2014 FR 1454141
(43) Date de publication de la demande: 15.03.2017
(73) Titulaire: Pylote, 31280 Dremil-Lafage (FR)
(72) Inventeur: MARCHIN, Loïc, 31280 Mons (FR)
(74) Mandataire: Cabinet Becker et Associés
(86) Numéro de dépôt international: PCT/FR2015/051223
(87) Numéro de publication internationale: WO 2015/170060

(56) Documents cités:
- WO-A1-2013/123517
- DE-A1-102012 206 004
- US-A- 5 851 715
- US-A1- 2010 247 914
- ROGER MUELLER ET AL: "Non-agglomerated dry silica nanoparticles", POWDER TECHNOLOGY, vol. 140, no. 1-2, 1 février 2004 (2004-02-01), pages 40-48, XP055166873, ISSN: 0032-5910, DOI: 10.1016/j.powtec.2004.01.004
- IMAI ET AL: "Elasticoluminescence of europium-doped strontium aluminate spherical particles dispersed in polymeric matrices", MATERIALS LETTERS, NORTH HOLLAND PUBLISHING COMPANY. AMSTERDAM, NL, vol. 61, no. 19-20, 22 juin 2007 (2007-06-22), pages 4124-4127, XP022130064, ISSN: 0167-577X, DOI: 10.1016/J.MATLET.2007.01.069
- DONNA M. SPECKMAN ET AL: "Synthesis of Indium Oxide Microspheres for Antistatic Spacecraft Coatings", MRS PROCEEDINGS, vol. 372, 1 janvier 1994 (1994-01-01), XP055167001, DOI: 10.1557/PROC-372-247
- GUN YOUNG HONG ET AL: "Photoluminescence Characteristics of Spherical Y[sub 2]O[sub 3]:Eu Phosphors by Aerosol Pyrolysis", JOURNAL OF THE ELECTROCHEMICAL SOCIETY, vol. 148, no. 11, 1 janvier 2001 (2001-01-01), page H161, XP055166876, ISSN: 0013-4651, DOI: 10.1149/1.1406496
- STROBEL R ET AL: "Flame aerosol synthesis of smart nanostructured materials", JOURNAL OF MATERIALS CHEMISTRY, ROYAL SOCIETY OF CHEMISTRY, GB, vol. 17, 25 septembre 2007 (2007-09-25), pages 4743-4756, XP002540713, ISSN: 0959-9428, DOI: 10.1039/B711652G
- TELEKI ET AL: "Flame-coating of titania particles with silica", JOURNAL OF MATERIALS RESEARCH, MATERIALS RESEARCH SOCIETY, WARRENDALE, PA, US, vol. 20, no. 5, 1 May 2005 (2005-05-01), pages 1336-1347, XP009112473, ISSN: 0884-2914, DOI: 10.1557/JMR.2005.0160

## Description

La présente invention concerne des particules inorganiques ayant la propriété particulière d'être spontanément individualisées, à la fois à l'état sec sous forme de poudre, et quand elles sont dispersées dans une matrice. L'invention concerne également un procédé de préparation de ces particules, ainsi que des matériaux obtenus par inclusion de ces particules dans des matrices.

### Etat de l'art de l'invention

Dans le domaine des matériaux, il est courant d'utiliser des particules pour conférer à un matériau des propriétés désirées, car il existe une très large gamme de particules, celles-ci permettant d'obtenir une gamme tout aussi large de propriétés. Les propriétés conférées au matériau par les nano et/ou microparticules sont généralement liées aux propriétés des particules elles-mêmes, telles que leurs propriétés morphologiques, structurales et/ou chimiques notamment.

Les particules de morphologie sphérique sont particulièrement intéressantes dans différents domaines. Les particules qui sont dites sphériques sont souvent soit des agrégats de particules non sphériques, l'agrégat ayant lui-même une forme s'approchant d'une sphère, soit présentent une sphéricité non satisfaisante. Différents procédés ont été développés pour optimiser la sphéricité des particules synthétisées. La plupart de ces procédés sont optimisés pour un seul type de particules, par exemple un type chimique (les particules de silice par exemple) ou une morphologie (les particules creuses par exemple). Des procédés de synthèse de particules inorganiques sont notamment décrits dans les documents suivants : WO 2013/123517 ; US 5,851,715 ; DE 10 2012206004 ; Mueller et al. Powder Tech. 2004, 140, 40-48 ; Imai et al. Materials Letters, 2007, 61, 4124-4127 ; Speckman et al. MRS Proceedings, 1994, 372 ; Strobel et al. J. Mater. Chem. 2007, 17, 4743-4756 ; Hong et al. J. Electrochem. Soc. 2001, 148, H161 ; US 2010/247914 ; et Teleki et al. J. Mater. Res. 2005, 20, 1336-1347.

Il serait par conséquent intéressant de disposer de nouveaux procédés permettant la synthèse de particules sphériques de toute nature et de toute morphologie.

La dispersion de particules dans des matrices est également une technique classique pour conférer une propriété désirée à ladite matrice. Par exemple, des pigments peuvent être dispersés dans des matrices pour leur conférer des propriétés de couleur. La nature des particules, leurs propriétés de surface, et éventuellement leur enrobage doivent être optimisés pour obtenir une dispersion satisfaisante dans la matrice. L'optimisation de la dispersabilité des particules dans la matrice va dépendre à la fois de la nature des particules et de la nature de la matrice. Il est important de pouvoir disperser de façon relativement homogène les particules dans la matrice, afin de répartir de façon homogène la propriété recherchée dans l'ensemble du volume de la matrice. Lorsque les particules s'agglomèrent dans la matrice, les propriétés recherchées ne sont pas conférées à la matrice de façon homogène et le résultat recherché (la matrice avec la propriété recherchée) n'est pas obtenu de façon satisfaisante.

Il serait par conséquent intéressant de disposer de nouveaux procédés permettant de disperser de façon aussi satisfaisante que possible n'importe quel type de particules dans n'importe quelle matrice.

Dans ce cadre, la Demanderesse a trouvé un procédé permettant de préparer des particules inorganiques parfaitement sphériques micrométriques de différentes natures chimiques et de différentes morphologies. De façon surprenante, les particules obtenues par ce procédé, quelles que soient leur nature chimique et leur morphologie, restent à l'état individualisé et ne forment pas d'agrégats aussi bien à l'état sec que lorsqu'elles sont dispersées dans une matrice.

### Résumé de l'invention

La présente invention est telle que définie par les revendications annexées.

Le premier objet de la présente invention est un ensemble de particules inorganiques sphériques micrométriques, caractérisé en ce que les particules sont individualisées, notamment à l'état sec ou dans une matrice. Plus précisément, la présente invention concerne un ensemble de particules inorganiques, sphériques, micrométriques, et individualisées, caractérisé en ce que les particules ont :
- un diamètre moyen en nombre compris entre 0,5 et 5 µm,
- un coefficient de sphéricité supérieur ou égal à 0,85, et
- une surface spécifique supérieure ou égale à 15 m²/g,
où les particules sont des particules de ZnO, des particules d'alumine, des particules de boehmite, des particules d'oxyde de cuivre, des particules d'oxyde de titane, des particules d'oxyde mixte de titane et silicium, des particules de montmorillonite, des particules d'hydrotalcite, des particules de dihydroxyde de magnésium, des particules d'oxyde de magnésium, des particules de dioxyde de zirconium, des particules d'oxyde d'yttrium Y₂O₃, des particules de dioxyde de cérium, des particules de zircone stabilisée à l'yttrium, des particules de CaCu₃Ti₄O₁₂, des particules de BaTiO₃, des particules d'oxyde de fer, des particules de sulfate de magnésium, des particules de Zn_{0,18}Mn_{0,82}Fe₂O₄, des particules de Mn₂P₂O₇, des particules d'oxyde de nickel manganèse, des particules de mullite, des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

Un second objet de l'invention est un matériau comprenant un ensemble de particules selon l'invention dispersées de façon substantiellement homogène dans une matrice.

Un troisième objet de l'invention est un procédé de préparation d'un ensemble de particules inorganiques, sphériques, micrométriques, et individualisées, par pyrolyse d'aérosol, comprenant la mise en oeuvre d'étapes suivantes, dans un réacteur :
- la nébulisation à une température de 10 à 40 °C d'une solution liquide contenant un précurseur du ou des matériaux inorganiques duquel ou desquels on veut former des particules à une concentration molaire donnée dans un solvant, de sorte à obtenir un brouillard de gouttelettes de solution,
- le chauffage du brouillard à une température apte à assurer l'évaporation du solvant et la formation de particules, à une température de 40 à 120 °C,
- le chauffage de ces particules à une température de 120 à 400 °C, apte à assurer la décomposition du précurseur pour former le matériau inorganique,
- optionnellement la densification des particules à une température entre 200 et 1000°C,
- éventuellement la trempe des particules, et
- la récupération des particules ainsi formées.

Un dernier objet de l'invention est un procédé de préparation d'un matériau selon l'invention, comprenant la mise en contact d'une matrice avec un ensemble de particules selon l'invention.

### Brève description des figures

Figure 1 : Représentation schématique d'un réacteur adapté pour la mise en oeuvre du procédé selon l'invention.
Figure 2 : Image de MEB (Microscopie Electronique à Balayage) de particules de silice mésoporeuses obtenues par le procédé selon l'invention.
Figure 3 : Images de MEB (Microscopie Electronique à Balayage) de particules de boehmite mésoporeuses selon l'invention (figures 3a, 3b, 3c, 3d).
Figure 4 : Images de MEB (Microscopie Electronique à Balayage) de particules d'oxyde de cuivre creuses selon l'invention (figures 4a, 4b, 4c).
Figure 5 : Images de MEB (Microscopie Electronique à Balayage) de particules d'alumine mésoporeuses selon l'invention (figures 5a, 5b, 5c).
Figure 6 : Images de MEB (Microscopie Electronique à Balayage) de particules mixtes SiO₂/TiO₂ mésoporeuses selon l'invention: SITI_01 (figure 6a), SITI_02 (figure 6b) et SITI_03 (figure 6c).
Figure 7 : Images de MEB (Microscopie Electronique à Balayage) de particules d'alumine creuses selon l'invention (figures 7a et 7b).
Figure 8 : Images de MEB (Microscopie Electronique à Balayage) de particules de silice denses obtenues par le procédé selon l'invention (figures 8a et 8b).
Figure 9 : Image de MEB (Microscopie Electronique à Balayage) de particules d'oxyde de magnésium creuses selon l'invention.
Figure 10 : Image de MEB (Microscopie Electronique à Balayage) de particules de boehmite mésoporeuses selon l'invention dans une matrice de polyéthylène.
Figure 11 : Image de MEB (Microscopie Electronique à Balayage) de particules de ZrO₂ creuses selon l'invention dans une matrice d'émail.
Figure 12 : Images de MEB (Microscopie Electronique à Balayage) de particules de ZnO denses selon l'invention dans une matrice d'ABS (Acrylonitrile Butadiène Styrène) (figures 12a et 12b).
Figure 13 : Image de MEB (Microscopie Electronique à Balayage) de particules de silice mésoporeuses commerciales.

### Description détaillée de l'invention

Le premier objet de la présente invention est un ensemble de particules inorganiques, sphériques, micrométriques, et individualisées, caractérisé en ce que les particules ont :
- un diamètre moyen en nombre compris entre 0,5 et 5 µm,
- un coefficient de sphéricité supérieur ou égal à 0,85, et
- une surface spécifique supérieure ou égale à 15 m²/g,
où les particules sont des particules de ZnO, des particules d'alumine, des particules de boehmite, des particules d'oxyde de cuivre, des particules d'oxyde de titane, des particules d'oxyde mixte de titane et silicium, des particules de montmorillonite, des particules d'hydrotalcite, des particules de dihydroxyde de magnésium, des particules d'oxyde de magnésium, des particules de dioxyde de zirconium, des particules d'oxyde d'yttrium Y₂O₃, des particules de dioxyde de cérium, des particules de zircone stabilisée à l'yttrium, des particules de CaCu₃Ti₄O₁₂, des particules de BaTiO₃, des particules d'oxyde de fer, des particules de sulfate de magnésium, des particules de Zn_{0,18}Mn_{0,82}Fe₂O₄, des particules de Mn₂P₂O₇, des particules d'oxyde de nickel manganèse, des particules de mullite, des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

Lesdites particules sont individualisées, notamment à l'état sec ou dans une matrice.

Dans la présente invention, un ensemble de particules individualisées désigne un ensemble de particules dans lequel les particules ne sont pas agrégées, c'est-à-dire que chaque particule de l'ensemble n'est pas liée à d'autres particules par des liaisons chimiques fortes telles que des liaisons covalentes.

Un ensemble de particules peut éventuellement contenir de façon ponctuelle des particules ne répondant pas à cette caractéristique, dans la mesure où le critère de non agrégation est respecté par au moins 50% en nombre des particules de l'ensemble. De préférence, au moins 60%, au moins 70%, au moins 80%, au moins 90%, au moins 95% en nombre des particules de l'ensemble considéré sont individualisées.

De préférence, une particule de l'ensemble n'est pas constituée par l'agrégation de plusieurs particules de taille inférieure. Ceci peut être clairement visualisé par exemple par des études en microscopie, notamment en microscopie électronique à balayage ou en transmission. Ceci signifie que les seuls constituants possibles des particules sont des cristallites de taille nettement inférieure à celle des particules. Une particule est de préférence formée d'au moins deux cristallites. Une cristallite est un domaine de matière ayant la même structure qu'un monocristal, c'est-à-dire qu'au sein de chaque plan atomique définissant cette structure il n'y a pas de discontinuité majeure de l'ordre cristallin hormis des défauts ponctuels (lacunes, atomes en insertion ou substitution) ou linéaires (dislocations).

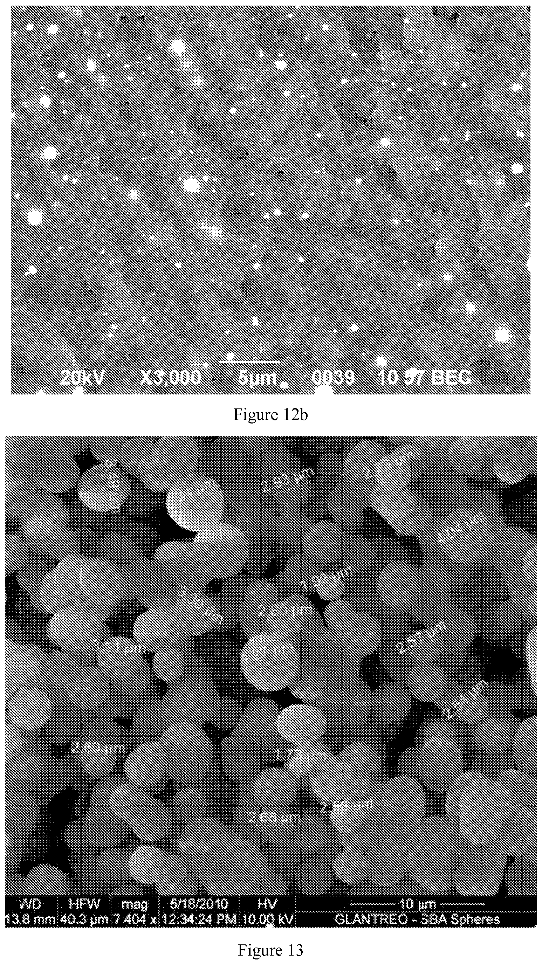

A titre de comparaison, les techniques d'atomisation classiquement utilisées dans l'art fournissent généralement des particules non sphériques agrégées. Les objets qui sont formés par ces agrégats de particules peuvent être sphériques. La figure 13 présente une image de microscopie électronique à balayage de particules de silice mésoporeuses commerciales. Les particules ne sont pas parfaitement sphériques et peuvent être agrégées, ce qui n'est pas le cas avec les particules de la présente invention.

Les particules selon la description sont sphériques, c'est-à-dire qu'elles ont un coefficient de sphéricité supérieur ou égal à 0,75.

Les particules selon l'invention ont un coefficient de sphéricité supérieur ou égale à 0,85, de préférence supérieur ou égal à 0,9, ou encore supérieur ou égal à 0,95.

Le coefficient de sphéricité d'une particule est le rapport du plus petit diamètre de la particule au plus grand diamètre de celle-ci. Pour une sphère parfaite, ce rapport est égal à 1. Le coefficient de sphéricité peut être calculé par exemple par mesure du rapport d'aspect au moyen de tout logiciel adapté à partir d'images, par exemple d'images obtenues par microscopie, en particulier microscopie électronique à balayage ou en transmission, des particules.

Dans un mode de réalisation, l'ensemble de particules selon l'invention peut éventuellement contenir de façon ponctuelle des particules n'ayant pas les critères requis de sphéricité dans la mesure où la sphéricité moyenne en nombre sur l'ensemble des particules répond aux critères fixés dans la présente invention. Ainsi, les termes « ensemble de particules sphériques » désigne une pluralité de particules dont au moins 50% des particules en nombre présentent une sphéricité telle que définie ci-avant. De préférence, au moins 60%, au moins 70%, au moins 80%, au moins 90%, au moins 95% en nombre des particules de l'ensemble considéré ont une sphéricité telle que définie ci-dessus.

Par particule inorganique, on désigne dans la présente invention une particule constituée au moins en partie par un produit non organique, c'est-à-dire qui n'est pas issu de la chimie du carbone (hormis CO₃²⁻). La diversité chimique des particules inorganiques est bien connue de l'homme du métier.

Les particules inorganiques selon l'invention sont des particules de ZnO, des particules d'alumine, des particules de boehmite, des particules d'oxyde de cuivre, des particules d'oxyde de titane, des particules d'oxyde mixte de titane et silicium, des particules de montmorillonite, des particules d'hydrotalcite, des particules de dihydroxyde de magnésium, des particules d'oxyde de magnésium, des particules de dioxyde de zirconium, des particules d'oxyde d'yttrium Y₂O₃, des particules de dioxyde de cérium, des particules de zircone stabilisée à l'yttrium, des particules de CaCu₃Ti₄O₁₂, des particules de BaTiO₃, des particules d'oxyde de fer, des particules de sulfate de magnésium, des particules de Zn_{0,18}Mn_{0,82}Fe₂O₄, des particules de Mn₂P₂O₇, des particules d'oxyde de nickel manganèse, des particules de mullite, des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

Les particules inorganiques selon l'invention ou selon la description peuvent éventuellement comprendre au moins un dopant, tel que par exemple l'aluminium, l'erbium, l'europium ou l'ytterbium. Le dopant est compris en une proportion de 10% en masse au maximum, de préférence 5% en masse au maximum, en particulier 2% en masse au maximum.

Bien entendu, les particules peuvent comprendre une proportion minime, par exemple inférieure ou égale à 5% en masse, de contaminants qui peuvent avoir une nature chimique différente de celle desdites particules.

Dans un mode de réalisation préféré, les particules inorganiques sont des particules de ZnO, en particulier de ZnO hexagonal, éventuellement dopées, par exemple dopées à l'aluminium, des particules d'alumine, en particulier d'alumine amorphe, cubique ou rhomboédrique, des particules de boehmite, en particulier orthorhombique, des particules d'oxyde de cuivre, de préférence oxyde de cuivre cubique, des particules d'oxyde de titane, en particulier d'anatase ou de rutile, des particules d'oxyde mixte de titane et silicium, en particulier d'anatase, des particules de montmorillonite, en particulier monoclinique, des particules d'hydrotalcite, en particulier hexagonale, des particules de dihydroxyde de magnésium, en particulier hexagonal, des particules d'oxyde de magnésium, en particulier cubique, des particules de dioxyde de zirconium, en particulier quadratique, des particules d'oxyde d'yttrium Y₂O₃, en particulier cubique, éventuellement dopées à l'europium et/ou à l'erbium et/ou à l'ytterbium, des particules de dioxyde de cérium, des particules de zircone stabilisée à l'yttrium, des particules de CaCu₃Ti₄O₁₂, des particules de BaTiO₃, de préférence cubique, des particules d'oxyde de fer, de préférence sous forme hématite, des particules de sulfate de magnésium, de préférence orthorombique, des particules de Zn_{0,18}Mn_{0,82}Fe₂O₄, de préférence cubique, des particules de Mn₂P₂O₇, de préférence monoclinique, des particules d'oxyde de nickel manganèse, des particules de mullite, des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

Dans un mode particulier, les particules inorganiques sont des particules de ZnO, en particulier de ZnO hexagonal, éventuellement dopées, par exemple dopées à l'aluminium, des particules d'alumine, en particulier d'alumine amorphe, cubique ou rhomboédrique, des particules de boehmite, en particulier orthorhombique, des particules d'oxyde de cuivre, de préférence oxyde de cuivre cubique, des particules de montmorillonite, en particulier monoclinique, des particules d'hydrotalcite, en particulier hexagonale, des particules de dihydroxyde de magnésium, en particulier hexagonal, des particules d'oxyde de magnésium, en particulier cubique, des particules de dioxyde de cérium, des particules de zircone stabilisée à l'yttrium, des particules de CaCu₃Ti₄O₁₂, des particules de BaTiO₃, de préférence cubique, des particules d'oxyde de fer, de préférence sous forme hématite, des particules de sulfate de magnésium, de préférence orthorombique, des particules de Zn_{0.,18}Mn_{0.,82}Fe₂O₄, de préférence cubique, des particules de Mn₂P₂O₇, de préférence monoclinique, des particules d'oxyde de nickel manganèse, des particules de mullite (SiO2/Al2O3), des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

Dans un mode plus particulier, les particules sont des particules de MgO, de ZnO, de ZrO2 stabilisée à l'yttrium, de Mullite (SiO2/Al2O3), d'alumine, ou de telles particules dopées. Dans un autre mode plus particulier, les particules sont des particules de MgO, de ZnO, de ZrO2 stabilisée à l'yttrium, de Mullite (SiO2/Al2O3), ou de telles particules dopées.

Dans un mode de réalisation, la particule inorganique comprend plusieurs éléments chimiques, de préférence de 2 à 16 éléments chimiques différents, ce nombre d'éléments ne prenant pas en compte les éléments O et H éventuellement compris dans la particule. Il s'agit alors de particules hétérogènes, c'est-à-dire qui comprennent différents éléments dont la stoechiométrie est de préférence contrôlée par le procédé de synthèse.

De par la rapidité du procédé de préparation des particules, et l'existence éventuelle d'une étape de trempe à la fin du procédé de préparation des particules selon l'invention, celles-ci peuvent comprendre n'importe quel constituant chimique qu'il est possible de densifier, notamment de cristalliser, même les phases métastables. En effet, les conditions particulières mises en oeuvre dans le procédé permettent d'obtenir sous forme densifiée des composés dont la température de dégradation est inférieure à la température effectivement appliquée, car le temps passé à haute température est très court. Dans ce contexte, les termes « haute température » désignent de préférence une température supérieure à 40°C. Le « temps passé à haute température » désigne généralement le temps passé pour les étapes de séchage, pyrolyse et densification. De préférence, le temps passé à haute température n'excède pas 70 secondes, en particulier il est compris entre 30 et 70 secondes. De préférence, la trempe est caractérisée par une vitesse de refroidissement supérieure ou égale à 100°C ou supérieure à 300°C par seconde. Dans un mode de réalisation, les particules comprennent un type d'oxyde qui nécessite un apport d'énergie pour densifier, notamment pour cristalliser. On peut mentionner par exemple l'alumine, l'oxyde de zinc, l'oxyde de fer, le dioxyde de titane (rutile), le ZrO₂ cubique ou monoclinique, et les oxydes de terres rares (lanthanides et/ou yttrium). De telles particules ne peuvent pas être obtenues de la même façon par les procédés classiques utilisés dans l'art antérieur, notamment ceux qui ne comprennent pas d'étape de trempe.

Les particules hétérogènes peuvent soit comprendre plusieurs éléments chimiques (sauf O et H), de préférence tous les éléments chimiques (sauf O et H) constituant la particule, au sein de chaque cristallite, soit comprendre des cristallites formées chacune d'un seul élément chimique (sauf O et H). Dans un mode de réalisation particulier, chaque cristallite de la particule hétérogène comprend un seul élément chimique (sauf O et H).

Les particules selon l'invention ont un diamètre moyen en nombre compris entre 0,5 et 5 µm, par exemple entre 0,5 et 3 micromètres.

L'homme du métier connaît les techniques adaptées pour déterminer le diamètre des particules ou des ensembles de particules, et il connaît également le degré d'incertitudes existant sur ces mesures. Par exemple, le diamètre moyen des particules d'un ensemble, l'écart-type et la distribution des tailles notamment peuvent être déterminés par des études statistiques à partir d'images de microscopie, par exemple de microscopie électronique à balayage (MEB) ou en transmission (MET).

Dans le cas où les particules sont au sein d'un ensemble, les valeurs de diamètres ci-dessus peuvent correspondre au diamètre moyen des particules en nombre, même si certaines des particules de l'ensemble ont des diamètres en dehors de cette gamme. Avantageusement, toutes les particules de la population ont un diamètre tel que défini ci-dessus.

Dans un mode de réalisation, l'écart-type relatif à la taille des particules dans une population de particules est inférieur ou égal à 25%, de préférence inférieur ou égal à 20%.

La distribution des tailles des particules dans l'ensemble de particules peut être monomodale ou multimodale.

L'utilisation de particules micrométriques dans la présente invention permet de favoriser les propriétés de dispersion de particules car elles ne sont pas trop grosses mais de ne pas avoir les inconvénients (difficultés de mise en oeuvre, toxicité, ...) des nanoparticules.

Les particules peuvent avoir différentes morphologies. Par exemple, elles peuvent être pleines, creuses, poreuses, mésoporeuses, non poreuses, et peuvent également encapsuler ou comprendre d'autres entités telles que des molécules organiques, auquel cas il s'agit de particules hydrides organiques-inorganiques, ou des composés inorganiques, notamment sous forme de nanoparticules. L'encapsulation peut être réalisée soit pendant la synthèse des particules, soit en post-traitement. Dans le cas où les particules sont creuses, l'épaisseur de paroi peut être contrôlée, en particulier au moyen des paramètres du procédé de synthèse.

Dans la présente invention, conformément à la définition IUPAC, un matériau est dit microporeux lorsqu'il présente des pores de taille inférieure à 2 nm. Un matériau est dit mésoporeux lorsqu'il présente des pores de taille comprise entre 2 et 50 nm. Un matériau est dit macroporeux lorsqu'il présente des pores de taille supérieure à 50 nm.

Typiquement, les matériaux mésoporeux peuvent être des composés de type silices amorphes ou paracristallines, dans lesquelles les pores sont généralement distribués de façon aléatoire, avec une distribution de la taille des pores pouvant être très large.

Un des principaux avantages de l'invention est de proposer des particules micrométriques, selon des tailles telles que définies ci-dessus, tout en pouvant présenter des surfaces spécifiques élevées. Les particules selon l'invention présentent des surfaces spécifiques supérieures ou égales à 15m²/g, de préférence supérieures ou égales à 30m²/g.

Les surfaces spécifiques des particules peuvent aller jusqu'à 700 m²/g ou 600 m²/g. Bien entendu, les surfaces spécifiques varient, notamment en fonction du diamètre des particules et de leur porosité. Selon un mode particulier, le diamètre des particules selon l'invention est compris entre 0,5 et 3 micromètres, et présentent des surfaces spécifiques supérieures ou égales à 15m²/g, de préférence supérieures ou égales à 30m²/g. Les surfaces spécifiques peuvent être mesurées selon différentes méthodes, en particulier selon la méthode Brunauer, Emmett, Teller (BET) ou la méthode Barrett, Joyner, Halenda (BJH). Les valeurs de surfaces spécifiques spécifiées ci-dessus sont données selon la méthode BET, sauf mention contraire.

Un second objet de l'invention est un matériau comprenant des particules selon l'invention, dispersées de façon substantiellement homogène dans une matrice.

Selon la présente invention, le terme matrice désigne n'importe quel matériau pouvant avantageusement bénéficier de l'inclusion de particules selon l'invention. Il peut s'agir notamment de matrices solides ou liquides, quelle que soit la viscosité de la matrice liquide.

Dans un mode de réalisation, la matrice est une matrice liquide, par exemple un solvant, de préférence un solvant aqueux, tel que l'eau ou un alcool tel que l'éthanol ou l'éthylène glycol, ou encore un solvant organique tel que le méthacrylate de méthyle. La matrice liquide peut également comprendre un mélange de solvants, ou un prémélange concentré ou non de solvants.

Dans un mode de réalisation, la matrice est une matrice solide, par exemple une matrice métallique, céramique ou polymérique, en particulier une matrice polymérique thermoplastique. Parmi les matrices polymériques thermoplastiques utilisables selon l'invention, on peut citer notamment le polyéthylène, le polyéthylène téréphtalate, le polypropylène, le polyoxyméthacrylate, l'ABS (Acrylonitrile Butyrène Styrène) ou le polyéthylènevinylacétate.

L'inclusion des particules selon l'invention dans une matrice permet de conférer des propriétés, notamment mécaniques, thermiques et/ou physicochimiques, particulières à la matrice. L'inclusion des particules dans la matrice peut être effectuée par les techniques classiquement utilisées dans l'art, notamment par agitation mécanique lorsque la matrice est liquide.

Le matériau selon l'invention peut être notamment obtenu sous forme de liquide, de poudre, de billes, de pastilles, de granulés, et/ou d'extrudés, les opérations de mise en forme étant réalisées par les techniques classiques connues de l'homme du métier, en particulier lorsque la matrice est une matrice polymérique.

En particulier, le procédé de mise en forme du matériau ne nécessite pas d'étape supplémentaire de dispersion des particules au sein de la matrice par rapport au procédé de mise en forme classiquement utilisé pour les matrices sans inclusion de particules. Le procédé de mise en forme peut de préférence être mis en oeuvre sur les équipements et filières de transformation utilisés classiquement pour les matrices sans inclusion de particules. La dispersion des particules au sein de la matrice peut, dans certains modes de réalisation, être réalisée sans agent dispersant chimique supplémentaire.

Dans un mode de réalisation particulier, la dispersion des particules au sein de la matrice est réalisée en présence ou non d'un agent dispersant chimique, tel qu'un surfactant. L'homme du métier est à même de déterminer si l'utilisation d'un agent dispersant est nécessaire pour obtenir la dispersion recherchée et d'adapter la quantité d'agent dispersant à utiliser le cas échéant. Par exemple, l'agent dispersant peut être utilisé en une quantité de 0,5 à 50% en masse par rapport à la masse de particules, notamment en une quantité de 0,5 à 20% en masse par rapport à la masse de particules.

Les particules selon l'invention ont la particularité de se disperser de façon substantiellement homogène en volume dans la matrice, quelles que soient leur nature chimique, leur morphologie et la nature de la matrice. Cela signifie que la densité de particules par unité de volume est généralement la même en tout point de la matrice. Dans le cas d'une matrice solide, la densité de particules par unité de surface est de préférence à peu près la même quelle que soit la surface de la matrice considérée, qu'il s'agisse d'une surface d'extrémité de la matrice, ou d'une surface obtenue par coupe du matériau par exemple. Ainsi, la ou les propriétés qui est/sont conférée(s) à la matrice par l'inclusion des particules selon l'invention est/sont répartie(s) de façon substantiellement homogène dans l'ensemble du volume de matrice.

Le matériau selon l'invention peut comprendre des particules selon l'invention en toute proportion adaptée pour lui conférer les propriétés désirées. Par exemple, le matériau peut comprendre de 0,1 à 80% en masse de particules par rapport à la masse totale de matrice et de particules, de préférence de 1 à 60% en masse, en particulier de 2 à 25% en masse.

De préférence, les particules selon l'invention sont des particules individualisées non déformables. Aussi, la surface de chaque particule qui est en contact avec d'autres particules est généralement très faible. Dans un mode de réalisation, le rayon de courbure du ménisque formant le contact entre deux particules différentes de l'ensemble est inférieur à 5%, de préférence inférieur à 2%, du rayon de chacune des deux particules, en particulier au sein d'une matrice ou sous forme de poudre.

La sphéricité des particules selon l'invention permet également, pour un même taux de charge dans une matrice liquide, d'obtenir une viscosité plus faible qu'avec des particules non sphériques.

Un autre objet de la présente invention est un procédé de préparation d'un ensemble de particules, tel que décrit ci-avant. Le procédé selon l'invention est un procédé dit « par pyrolyse d'aérosol » (ou spray pyrolyse) qui est mis en oeuvre à des températures de séchage et pas nécessairement de pyrolyse. Ce procédé est un procédé amélioré par rapport au procédé de pyrolyse d'aérosol notamment décrit dans la demande FR 2 973 260. Plus précisément, le procédé selon l'invention est généralement mis en oeuvre dans un réacteur. L'ensemble de particules ainsi obtenu peut ainsi correspondre à des grandes quantités, plus spécifiquement la quantité obtenue peut être de plus de 100g, 500g, 1kg, 15 kg, ou 20kg, cette quantité variant en fonction de l'alimentation en solution fournie et/ou désirée au réacteur. L'ensemble des particules ainsi obtenu présente donc l'avantage d'être obtenu en grande quantité, tout en respectant les caractéristiques des particules telles que décrites ci-avant.

Ce procédé comprend les étapes suivantes :
(1) la nébulisation d'une solution liquide contenant un précurseur du ou des matériaux inorganiques duquel ou desquels on veut former des particules à une concentration molaire donnée dans un solvant, de sorte à obtenir un brouillard de gouttelettes de solution,
(2) le chauffage du brouillard à une température (dite de séchage) apte à assurer l'évaporation du solvant et la formation de particules,
(3) le chauffage de ces particules à une température (dite de pyrolyse) apte à assurer la décomposition du précurseur pour former le matériau inorganique,
(4) optionnellement la densification des particules, et
(5) la récupération des particules ainsi formées.

L'étape (1) de nébulisation est réalisée à une température de 10 à 40 °C, de préférence pendant une durée inférieure ou égale à 10 secondes, en particulier inférieure ou égale à 5 secondes. A l'étape (1), la solution liquide est en général sous forme de solution aqueuse ou hydro alcoolique ou sous forme d'un sol colloïdal. Plus spécifiquement, la solution liquide de l'étape (1) est introduite dans un réacteur par nébulisation.

L'étape (2) de chauffage (séchage) est réalisée à une température de 40 à 120 °C, de préférence pendant une durée inférieure ou égale à 10 secondes, en particulier comprise entre 1 et 10 secondes.

L'étape (3), dite de pyrolyse, est réalisée à une température de 120 à 400 °C, de préférence pendant une durée inférieure ou égale à 30 secondes, en particulier comprise entre 10 et 30 secondes.

L'étape (4) optionnelle de densification est réalisée à une température comprise entre 200 et 1000°C. Cette étape est réalisée de préférence à une température de 400 à 1000 °C, en particulier lorsque les particules que l'on veut préparer sont au moins en partie sous forme cristallisée. Lorsque l'on cherche à obtenir des particules denses mais non cristallisées, en particulier des particules amorphes, la température de densification peut être plus faible, par exemple elle peut être aux alentours de 200°C à 300°C, notamment pour la silice amorphe. De préférence, l'étape de densification est réalisée pendant une durée inférieure ou égale à 30 secondes, en particulier comprise entre 20 et 30 secondes.

L'étape (5) de récupération est réalisée de préférence à une température inférieure à 100 °C, et/ou de préférence pendant une durée inférieure ou égale à 10 secondes, en particulier inférieure ou égale à 5 secondes. L'étape (5) de récupération des particules est réalisée de préférence par dépôt des particules sur un filtre en sortie du réacteur.

Les températures de chacune des étapes peuvent se situer en dehors des gammes de températures fournies ci-dessus. En effet, pour les mêmes particules, la température à appliquer pourra dépendre de la vitesse à laquelle les gouttes puis les particules circulent dans le réacteur. Plus les gouttes puis les particules circulent vite dans le réacteur, moins elles y passent de temps et plus la température de consigne doit être élevée pour obtenir le même résultat.

Les étapes (2), (3) et (4) sont réalisées dans le même réacteur. En particulier, l'ensemble des étapes du procédé (excepté les étapes de post-traitement) sont réalisées dans le même réacteur.

L'ensemble des étapes du procédé, en particulier les étapes (2), (3) et (4), sont réalisées dans la continuité l'une de l'autre. Le profil de température appliqué dans le réacteur est adapté en fonction des particules que l'on souhaite former pour que ces trois étapes aient lieu les unes après les autres. De préférence, la température dans le réacteur est ajustée par l'intermédiaire d'au moins un, de préférence 3, éléments chauffants dont les températures peuvent être définies indépendamment.

Le procédé selon la présente invention comprend de préférence en outre entre l'étape (3), ou éventuellement l'étape de densification des particules (4) lorsqu'elle est mise en oeuvre, et l'étape de récupération des particules (5) une étape (4') de trempe des particules. L'étape de trempe (4') correspond à une diminution en température rapide. Plus spécifiquement, lorsque l'étape de densification des particules (4) est mise en oeuvre, l'étape de trempe a de préférence lieu, et elle correspond avantageusement à une diminution de température d'au moins 300°C/s, par exemple pour atteindre une température comprise entre 15 et 50°C. Plus spécifiquement, lorsque l'étape de densification des particules (4) n'est pas mise en oeuvre, l'étape de trempe a éventuellement lieu, et, si elle a lieu, elle correspond avantageusement à une diminution de température d'au moins 100°C/s. L'étape de trempe (4') est de préférence réalisée par entrée d'un gaz, de préférence de l'air, froid sur tout ou partie de la circonférence du réacteur. Un gaz est dit froid dans la présente invention s'il est à une température comprise entre 15 et 50°C, de préférence entre 15 et 30°C. Dans un mode de réalisation, le gaz entrant dans le réacteur est un gaz différent de l'air. En particulier, il peut s'agir d'un gaz neutre (tel que l'azote ou l'argon), d'un gaz réducteur (tel que l'hydrogène ou le monoxyde de carbone), ou d'un quelconque mélange de tels gaz.

Le procédé est mis en oeuvre de préférence en absence de flux de gaz vectorisant le brouillard depuis le début (e.g. le bas) du réacteur. Le flux laminaire permettant d'amener la matière dans la zone dans laquelle la température est plus élevée est avantageusement créé uniquement par l'aspiration en fin (e.g. haut) du réacteur, produisant une dépression, par exemple de l'ordre de quelques pascals ou quelques dizaines de pascals.

Un tel mode de réalisation permet d'utiliser un réacteur sans entrée de gaz dans sa partie inférieure, limitant ainsi les perturbations du procédé et les pertes, et optimisant ainsi le rendement du procédé et la distribution en taille des particules obtenues.

Dans un autre mode de réalisation, le réacteur dans lequel le procédé est mis en oeuvre comprend également une entrée de gaz au niveau où le brouillard est formé. Le gaz qui entre dans le réacteur à ce niveau est de préférence de l'air, en particulier de l'air chaud, c'est-à-dire à une température de 80 à 200°C.

De préférence, le procédé selon l'invention ne comprend pas d'autre étape de chauffage que celles mises en oeuvre à l'intérieur du réacteur de pyrolyse d'aérosol.

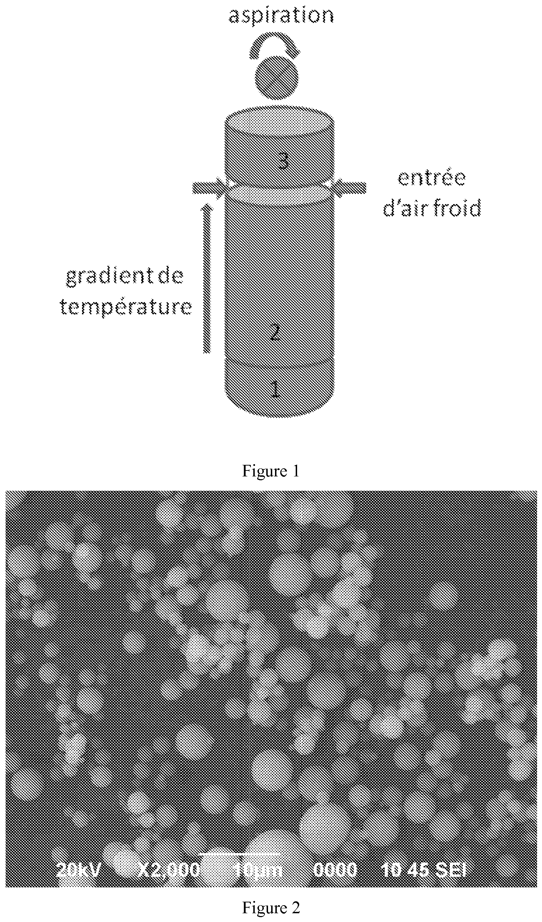

La figure 1 présente un exemple de schéma de réacteur pour la mise en oeuvre du procédé selon l'invention. La partie basse (1) du réacteur comprend la solution liquide contenant un précurseur du ou des matériaux inorganiques duquel ou desquels on veut former des particules à une concentration molaire donnée dans un solvant. Cette solution est nébulisée au niveau de la partie intermédiaire (2), et les gouttelettes montent par aspiration dans le réacteur. L'entrée de gaz froid, en particulier d'air froid, permet une trempe des particules. La partie supérieure (3) du réacteur est également à une température froide (inférieure à 100°C, par exemple comprise entre 15 et 50°C).

Le précurseur ou les précurseurs du ou des matériaux inorganiques duquel ou desquels on veut former des particules peut être de toute origine. Il(s) est(sont) introduit(s) à l'étape (1) du procédé sous forme d'une solution liquide, en particulier une solution aqueuse ou hydro alcoolique contenant les ions métalliques (comme un sel organique ou minéral du métal considéré) ou les molécules précurseurs (comme des organosilanes) ou encore sous forme d'un sol colloïdal (comme une dispersion colloïdale de nanoparticules du métal ou de l'oxyde du métal considéré). De préférence, Le précurseur ou les précurseurs du ou des matériaux inorganiques est(sont) introduit(s) à l'étape (1) du procédé sous forme d'une solution liquide, en particulier une solution aqueuse ou hydro alcoolique contenant les ions métalliques (comme un sel organique ou minéral du métal considéré). Le ou les précurseurs du ou des matériaux inorganiques est ou sont choisi(s) en fonction des particules que l'on souhaite former. Dans un mode de réalisation particulier, ce précurseur est au moins en partie issu de rebuts de plantes ou alimentaires, qui représentent des biosources. Comme exemples de tels précurseurs de matériau inorganique, on peut notamment citer le silicate de sodium issu des coques de riz. Des résidus d'abattoir, comme des os, peuvent servir de source de phosphate de calcium, du sang peut servir de précurseur d'oxyde de fer et/ou des coquilles de crustacés peuvent servir de source de carbonate de calcium.

Comme spécifié précédemment, selon un mode particulier de l'invention, les particules selon l'invention sont constitués au moins en partie par une composante métallique, éventuellement hybride organique-inorganique. Cette composante peut être obtenue par voie sol-gel à partir d'au moins un précurseur moléculaire métallique comportant un ou plusieurs groupes hydrolysables, éventuellement en présence d'au moins un tensioactif amphiphile (ou agent texturant particulier), le tensioactif étant éventuellement conservé.

Le procédé selon l'invention permet d'obtenir des particules présentant un haut degré de pureté. Ces particules ne nécessitent pas nécessairement la mise en oeuvre d'étapes ultérieures de traitement, telles qu'un lavage, un traitement thermique, un broyage, etc., avant leur utilisation.

Dans le procédé selon l'invention, toutes les entités introduites dans le réacteur sont transformées, ce qui est un avantage important car le procédé génère peu de déchets. En outre, le taux d'utilisation des atomes est élevé et conforme aux exigences de la chimie verte.

Le procédé selon l'invention peut comprendre au moins une étape de post-traitement des particules. Par exemple, il peut s'agir d'une étape de lavage avec un solvant adapté, d'une étape de mise en contact avec des conditions réductrices, d'une étape d'encapsulation à l'intérieur des particules, d'une étape de chauffage des particules, et/ou d'une étape de revêtement des particules, en particulier pour « étanchéifier » lesdites particules.

En particulier, une étape de post-traitement par chauffage des particules peut être nécessaire pour optimiser les propriétés des particules telles que leur composition ou leur structure cristalline. Une étape de post-traitement par chauffage des particules sera généralement d'autant moins nécessaire que la vitesse des gouttes puis des particules dans le réacteur sera moins grande.

Le procédé selon l'invention permet de contrôler précisément la taille des particules en sortie de procédé. En effet, il existe un rapport constant, lequel est aux alentours de 5, entre le diamètre des gouttes du brouillard utilisé et le diamètre des particules en sortie de procédé lorsque les concentrations en précurseurs sont molaires, ce qui est usuellement le cas. L'homme du métier sait déterminer en fonction de la concentration en précurseur le rapport entre ces deux diamètres. Par exemple, si la concentration en précurseur est diminuée d'un facteur 10, alors la taille des particules obtenues est diminué d'un facteur racine cubique de 10, soit environ 3. Le diamètre des gouttes peut en outre être notamment contrôlé par les paramètres du mode de nébulisation, par exemple la fréquence des éléments piézoélectriques utilisés pour former le brouillard.

Dans un mode de réalisation, au moins certaines des gouttes comprennent, en plus du ou des composés dont on souhaite former des particules, au moins un composé dit sacrificiel qui est par exemple soit soluble dans un solvant, tel que l'eau, l'eau acide ou l'eau basique, soit thermosensible, en particulier ce composé sacrificiel est vaporisé ou dégradé à la température du réacteur. Dans le cas où le composé sacrificiel est soluble dans un solvant, le procédé comprend avantageusement une étape de post-traitement comprenant le lavage des particules avec ledit solvant. La présence du composé dit sacrificiel dans les gouttes permet d'obtenir finalement des particules de propriétés telles que la taille, la porosité, la surface spécifique, différentes de celles des particules obtenues directement à partir des gouttes. Le composé sacrificiel peut être n'importe quel composé chimique liquide, solide ou gazeux qui possède les propriétés par exemple de solubilité et/ou thermosensibilité désirées.

Le procédé selon l'invention peut comprendre une étape d'encapsulation au sein des particules inorganiques d'autres entités telles que des molécules organiques, auquel cas il s'agit de particules hydrides organiques-inorganiques, ou des composés inorganiques, notamment sous forme de nanoparticules. L'encapsulation peut être réalisée soit pendant la synthèse des particules, soit en post-traitement.

Un autre objet de la description est un ensemble de particules susceptible d'être préparé selon le procédé défini ci-dessus, et en particulier par la mise en oeuvre du procédé comprenant ou constitué des étapes (1) à (5), telles que définies ci-dessus. Les particules ainsi préparées présentent les caractéristiques décrites ci-avant pour les particules selon l'invention et selon la description. Ce procédé permet en particulier d'obtenir des particules sphériques individualisées et micrométriques, et avantageusement présentant des surfaces spécifiques telles que décrites ci-dessus. De préférence, il permet également que chaque particule ne soit pas constituée par l'agrégation de plusieurs particules de taille inférieure. De préférence, les particules obtenues par ce procédé sont individualisées et non déformables.

Un dernier objet de l'invention est un procédé de préparation d'un matériau selon l'invention, comprenant la mise en contact d'une matrice telle que précédemment définie avec au moins un ensemble de particules selon l'invention. Ce procédé comprend ensuite de préférence une étape de mise en forme du matériau telle que décrite ci-avant.

Sauf précision contraire, les pourcentages mentionnés dans la présente invention sont des pourcentages en masse.

Les exemples qui suivent sont fournis à titre illustratif, et non limitatif, de l'invention.

### Exemples

Sauf précision contraire, dans les présents exemples, les mesures de surface spécifique, de volume poreux, de diamètre de pores ont été réalisées par la méthode BET ou BJH. Les mesures de granulométrie LASER ont été effectuées à l'aide d'un granulomètre LASER Mastersizer 2000 (Malvern Instruments), sur des dispersions des particules dans l'eau.

### Exemple 1 : Particules de silice mésoporeuses obtenues par le procédé selon l'invention

### Exemple 1.1 : Particules de silice mésoporeuses avec encapsulation in situ de composés organiques

Des particules de silice mésoporeuses encapsulant des molécules organiques ont été préparées à partir de deux précurseurs différents : un sol de silice commercial comprenant des particules de 10 à 30 nm, et du TEOS (tétraéthylorthosilicate).

### a) A partir du sol de silice

51 mL de sol de silice commercial mélangé à 238 mL d'eau déminéralisée sont préparés. Le composé organique est introduit à 50 % en poids par rapport à la masse de silice.

La solution « précurseur » est nébulisée par le procédé de spray pyrolyse.

La température maximale du four dans lequel se déroulent les étapes de séchage, pyrolyse et densification est réglée à 250°C.

### b) A partir du TEOS

145 mL d'eau déminéralisée dont le pH est ajusté à 1,4 par un acide fort (HCl ou HNO₃ par exemple) et 23 mL de TEOS (tetraéthylorthosilicate) sont introduits dans un bécher de 500 mL et le tout est laissé sous agitation pendant 3 heures. Le composé organique est introduit à hauteur de 50 % en poids par rapport à la masse de silicate.

La solution précurseur est nébulisée par le procédé de spray pyrolyse. La température maximale du four dans lequel se déroulent les étapes de séchage, pyrolyse et densification est réglée à 250°C.

### Exemple 1.2 : Particules de silice mésoporeuses avec encapsulation de molécules organiques en post-traitement

25 grammes de particules de silice mésoporeuses obtenues par spray pyrolyse selon l'invention (surface spécifique de 124 m²/g (BET), diamètre moyen 1,2 µm (granulométrie laser)) sont introduits dans une fiole de 500 mL munie d'une sortie à vide. Le milieu est chauffé à 140°C, sous vide pendant 6 heures.

400 mL d'une solution concentrée de composé organique (25 g) sont alors introduits et le tout est laissé sous agitation vigoureuse pendant 12 heures.

Les particules sont ensuite centrifugées et séchées sous air.

Le taux de charge est alors déterminé par différence de masse et est de l'ordre de 50 % en poids.

Une image MEB (Microscopie Electronique à balayage) des particules de silice mésoporeuses obtenues à l'exemple 1.1a) est présentée sur la figure 2. Des particules similaires ont été obtenues aux exemples 1.1b) et 1.2. Les analyses en granulométrie LASER ont fourni les valeurs suivantes : d50=1,72 µm. La surface spécifique BET des particules obtenues est de 122 m²/g.

### Exemple 2 : Particules de boehmite AlOOH mésoporeuses

### Les particules ont été synthétisées selon le procédé ci-dessous.

1- Chauffer 300 mL d'eau à 80°C.
2- Pendant la montée en température (vers 60°C), ajouter l'alcooxyde d'aluminium à 0,7M (soit 42,9g) sous très forte agitation.
3- Couvrir et agiter une heure à 80°C.
4- Au bout d'une heure, ajouter 2,6% massiques (soit 1,11g) d'acide nitrique.
5- Couvrir et agiter deux heures à 80°C.

La solution précurseur est nébulisée par le procédé de spray pyrolyse (SP100) selon l'invention. La température maximale atteinte dans le réacteur dans lequel se déroulent les étapes de séchage, pyrolyse et densification est 500°C.

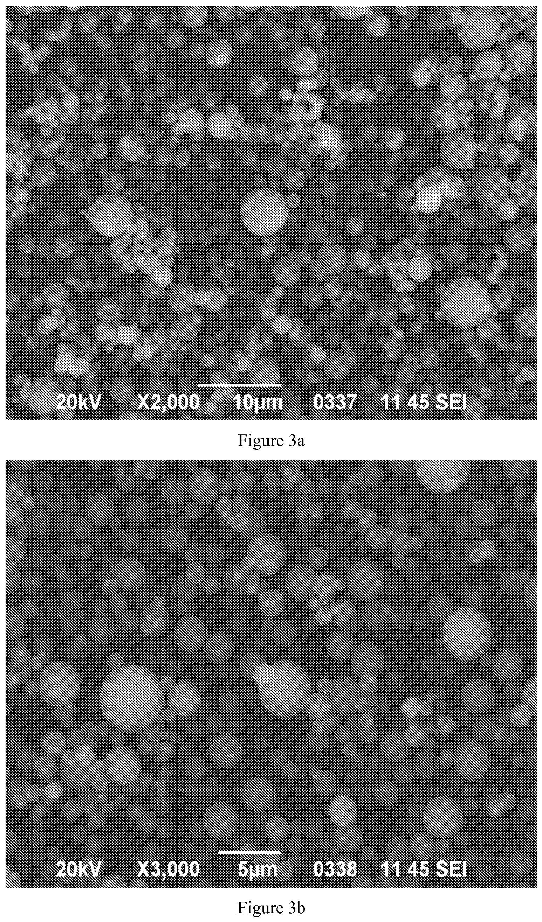

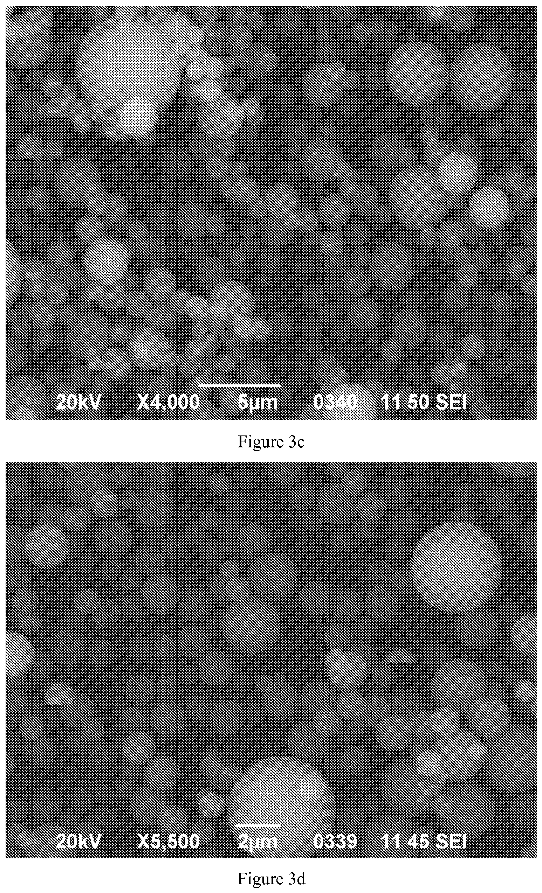

La figure 3 présente des images de MEB des particules de boehmite obtenues. Les analyses en Diffraction des rayons X ont permis d'identifier qu'il s'agit de boehmite orthorombique. La surface spécifique BET de la poudre obtenue est de 402 m²/g, et le diamètre moyen des pores (BET) est de 3 nm. Les analyses en granulométrie LASER ont fourni les valeurs suivantes : d10=0,76µm, d50=1,09µm et d90=1,8µm.

### Exemple 3 : Préparation de particules de CuO creuses

Une solution aqueuse est préparée avec 241 g de poudre de nitrate de cuivre trihydratée Cu(NO₃)₂, 3H₂O, dissous dans 1L d'eau.

La solution précurseur est nébulisée par le procédé de spray pyrolyse. La température maximale du four dans lequel se déroulent les étapes de séchage, pyrolyse et densification est réglée à 800°C.

Les particules sont ensuite traitées thermiquement, en four sous air, 2 heures à 500°C afin de compléter la décomposition des nitrates qui n'est pas totale en sortie du réacteur

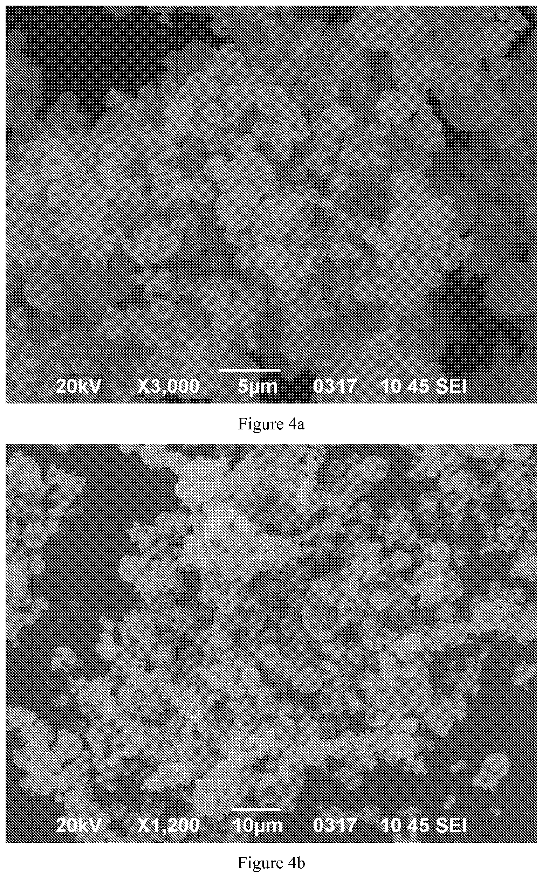

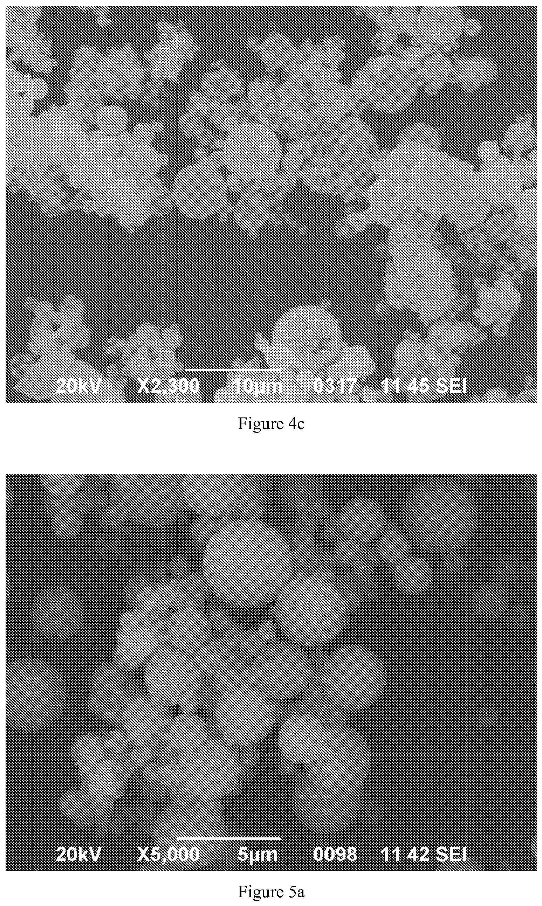

La figure 4 présente des images de MEB des particules de CuO obtenues. Les analyses en Diffraction des rayons X ont permis d'identifier qu'il s'agit de CuO monoclinique. Les analyses en granulométrie LASER ont fourni les valeurs suivantes : d10=0,416µm, d50=0,700µm et d90=0,999µm.

### Exemple 4 : Préparation de particules de cuivre métallique creuses

La poudre de CuO obtenue à l'exemple 3 est placée dans l'enceinte d'un four. Un flux de gaz réducteur (par exemple 5% H₂, 95% N₂) circule dans ce four durant toute la réaction. La réduction est réalisée pendant 3 heures à 500°C.

Des analyses de Diffraction aux Rayons-X ont montré que toutes les particules obtenues sont du cuivre.

### Exemple 5 : Particules d'alumine Al₂O₃ mésoporeuses

Les particules ont été préparées selon le procédé ci-dessous.
1- Chauffer 300mL d'eau à 80°C.
2- Pendant la montée en température (vers 60°C), ajouter l'alcooxyde d'aluminium à 0,7M (soit 42,9g) sous très forte agitation.
3- Couvrir et agiter une heure à 80°C.
4- Au bout d'une heure, ajouter 2,6% massiques (soit 1,11g) d'acide nitrique.
5- Couvrir et agiter deux heures à 80°C.

La solution précurseur est nébulisée par le procédé de spray pyrolyse selon l'invention.. Le profil des températures maximales atteintes dans le réacteur dans lequel se déroulent les étapes de séchage, pyrolyse et densification est le suivant : 350°C, 600°C, 800°C.

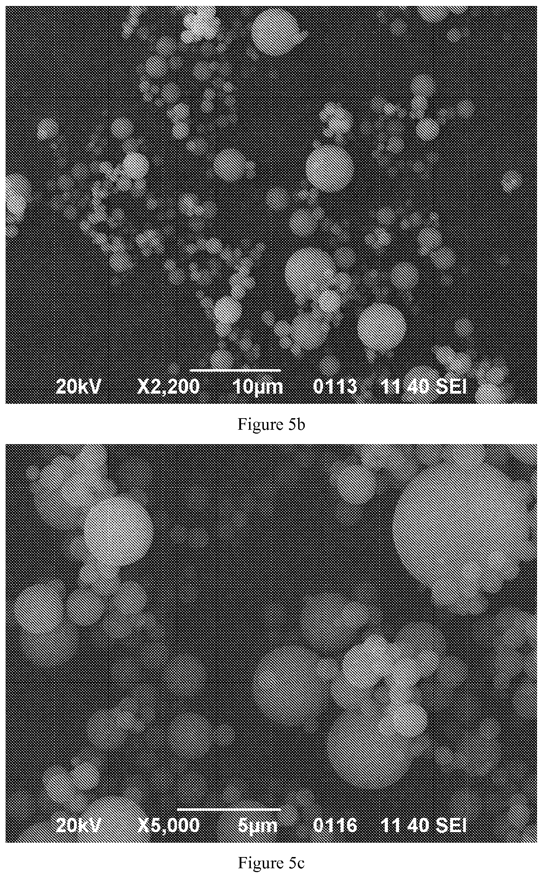

La figure 5 présente des images de MEB des particules d'Al₂O₃ obtenues. Les analyses en Diffraction des rayons X ont permis d'identifier qu'il s'agit de Al₂O₃ amorphe. La surface spécifique BET de la poudre obtenue est de 383 m²/g, et le diamètre moyen des pores est de 2,4 nm. Les analyses en granulométrie LASER ont fourni les valeurs suivantes : d10=0,95µm, d50=1,33µm et d90=2,26µm.

### Exemple 6 : Particules mixtes SiO₂/TiO₂ mésoporeuses

### Le sol de silice

Dans un bécher sont introduits 627 mL d'eau déminéralisée et 8 grammes d'un tensioactif (poloxamère tel que Pluronic, CTAB (bromure d'hexadécyltriméthylammonium) ou dérivé de polyoxyéthylène de la marque Brij par exemple). Après dissolution du tensioactif, 28 g de TEOS sont introduits sous agitation en une seule fois. Le mélange est maintenu sous agitation vigoureuse 15 heures afin de permettre l'hydrolyse et la condensation du TEOS et ainsi former le gel de silice.

### Le sol d'oxyde de titane

En parallèle, dans un ballon contenant 100 mL d'eau déminéralisée, un volume de 1,5 mL d'acide nitrique est introduit. La solution est portée à 70°C, et 17 grammes de butoxyde de titane sont ajoutés. La synthèse est laissée sous agitation vigoureuse pendant 12 heures pour permettre la synthèse des nanoparticules d'oxyde de titane. La dispersion est laissée à décanter 2 heures pour éliminer le butanol en surface.

### Spray Pyrolyse

Le sol de titane est introduit dans le sol de silice sous agitation magnétique pendant 5 minutes.

La solution précurseur est nébulisée par le procédé de spray pyrolyse selon l'invention. La température maximale du four dans lequel se déroulent les étapes de séchage, pyrolyse et densification est réglée à 500°C.

### Post-traitement

Les particules sont ensuite traitées thermiquement, en four sous air, 4 heures à 700°C. Le procédé est reproduit en faisant varier la quantité de TiO₂, pour obtenir les trois échantillons suivants : SITI_01, SITI_02 et SITI_03 (voir tableau 1 ci-dessous).

**Tableau 1**

| Référence | Masse TEOS | Masse Butoxyde titane | Ratio masse TiO₂ / masse SiO₂ | Surface spécifique BET | Surface spécifique BJH | Volume poreux BJH | Volume poreux BET | Diamètre moyen de pores BET |
|---|---|---|---|---|---|---|---|---|
| SITI_01 | 28 g | 17,0 g | 0,48 | 563 m²/g | 581 m²/g | 0,45 cm³/g | 0,45 cm³/g | 3,2 nm |
| SITI_02 | 28 g | 22,4 g | 0,65 | 518 m²/g | 614 m²/g | 0,41 cm³/g | 0,45 cm³/g | 3,5 nm |
| SITI_03 | 28 g | 11,2 g | 0,32 | 595 m²/g | 544 m²/g | 0,37 cm³/g | 0,46 cm³/g | 3,0 nm |

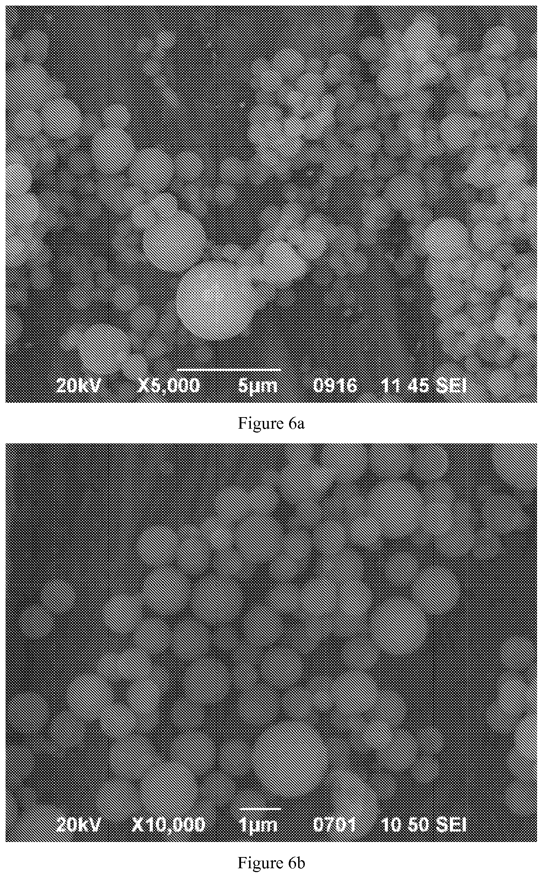

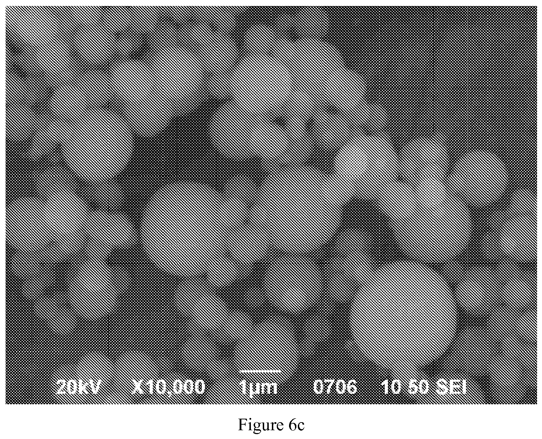

La figure 6 présente des images MEB des particules obtenues : SITI_01 (a), SITI_02 (b) et SITI_03 (c).

Le tableau 2 ci-dessous résume les propriétés des trois échantillons obtenus.

**Tableau 2**

| Référence | Diamètre moyen | Diamètre granulométrie laser (nombre) | Surface spécifique BET | Surface spécifique BJH | Diamètre moyen de pores | DRX de la phase TiO₂ (SiO₂ amorphe) |
|---|---|---|---|---|---|---|
| SITI_01 | 1,1µm ±0,6 µm | d10=0,52 µm | 563 m²/g | 581 m²/g | 3,2 nm | Rutile / brookite |
| | | **d50=0,78 µm** | | | | |
| | | d90=1,60µm | | | | |
| SITI_02 | 2,0 µm ±0,5 µm | d10=0,49 µm | 518 m²/g | 614 m²/g | 3,5 nm | Rutile / brookite |
| | | **d50=0,73 µm** | | | | |
| | | d90=1,48µm | | | | |
| SITI_03 | 1,8 µm ±1,1 µm | d10=0,53 µm | 595 m²/g | 544 m²/g | 3,0 nm | Rutile / brookite |
| | | **d50=0,79 µm** | | | | |
| | | d90=1,64µm | | | | |

Les valeurs de diamètres moyens sont obtenues par étude statistique sur des images de microcopie électronique.

### Exemple 7 : Autres types de particules

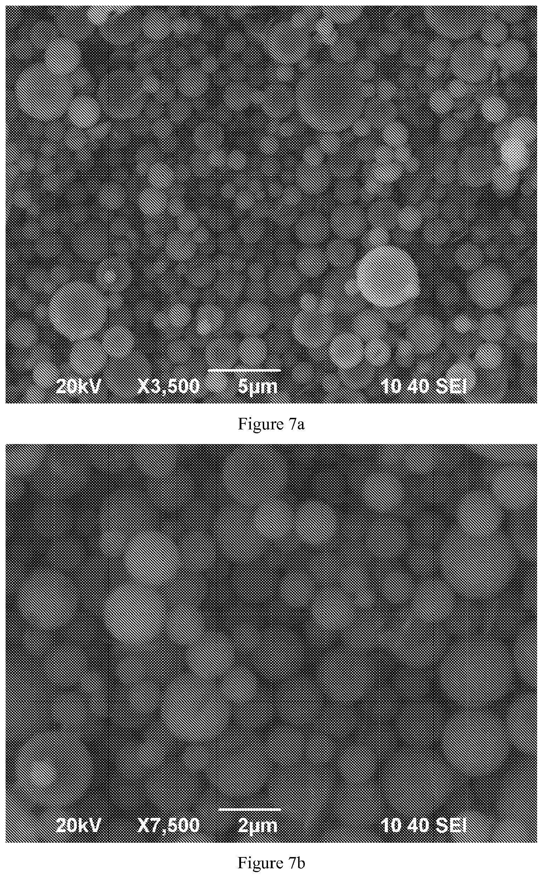

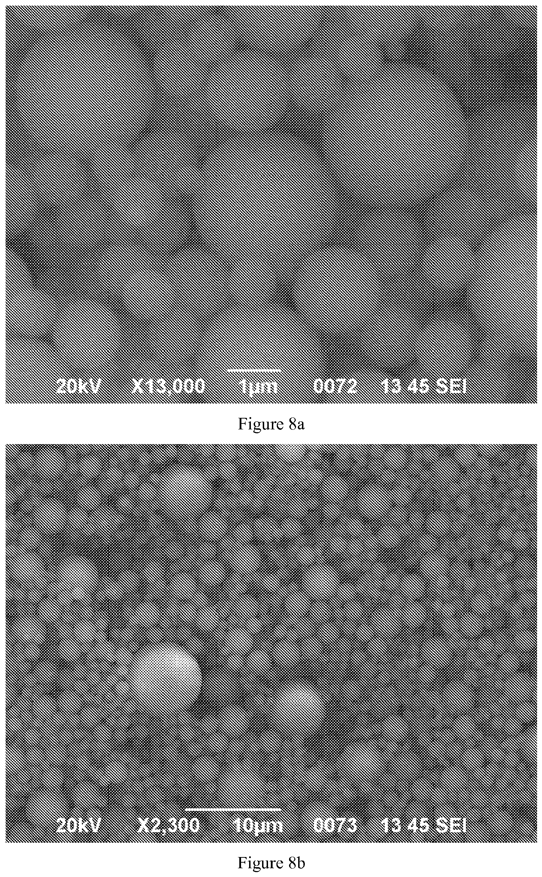

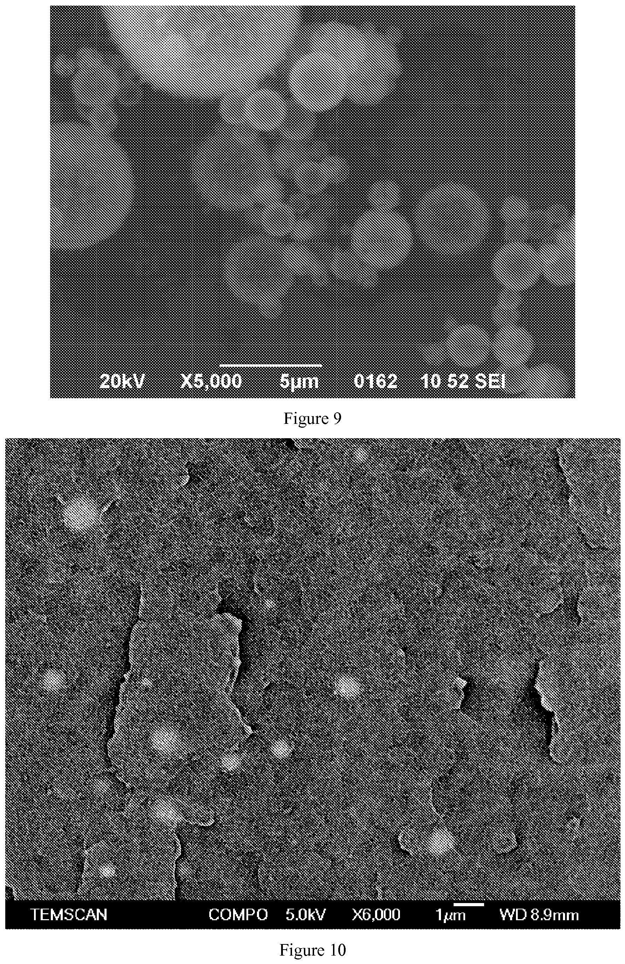

D'autres particules ont été préparées et caractérisées selon l'invention. Par exemple, les figures 7 à 9 présentent des images de Microscopie Electronique à Balayage de particules:
- particules d'alumine creuses, selon l'invention (figure 7)
- particules de silice denses, obtenues selon le procédé de l'invention (figure 8), et
- particules d'oxyde de magnésium (MgO) creuses, selon l'invention (figure 9).

Le tableau 3 ci-dessous donne des exemples de différents types de particules synthétisées selon l'invention.

Les éléments suivant le signe « : » dans le nom des particules dans le tableau 3 sont des dopants des particules.

Le terme « Bio-SiO₂ » désigne une silice biosourcée issue de silicate de sodium qui peut être obtenu par extraction de rebuts de plantes alimentaires.

| | **Taille (µm)** | **Morphologie** | **Phase cristalline** |
|---|---|---|---|
| h-ZnO | 0,5 | dense | Hexagonal |
| h-ZnO:Al | 1 | creux | hexagonal |
| h-ZnO:Al | 5 | creux | hexagonal |
| Al₂O₃ | 1,2 | creuse | amorphe |
| γ-Al₂O₃ | 1,2 | creuse | cubique |
| α-Al₂O₃ | 1,5 | creuse | rhomboédrique |
| SiO₂ | 1,9 | dense | amorphe |
| SiO₂ | 1,2 | meso | amorphe |
| O-AlOOH | 1,1 | meso | Orthorombique |
| C-CuO | 0,7 | creux | Cubique |
| Anatase-TiO₂ | 0,8 | meso | mélange anatase rutile |
| Rutile-TiO₂ | 1 | meso | quadratique |
| Al₂O₃ | 1,1 | meso | amorphe |
| γ-Al₂O₃ | 1,4 | meso | cubique |
| α-Al₂O₃ | 1,2 | dense | rhomboédrique |
| SiO₂TiO₂ | 1,3 | meso | Anatase |
| m-MMTHPS = Montmorillonite ((Na,Ca)_{0,3}(Al,Mg)₂Si₄O₁₀(OH) ₂·nH2O) | 1 | meso | monoclinique |
| h-LDHMG63HT = hydrotalcite (aluminum magnesium hydroxy carbonate) | 1 | meso | Hexagonal |
| h-Mg(OH)₂ | 0,7 | meso | hexagonal |
| h-ZnO: Al | 1 | meso | hexagonal |
| C-MgO | 1,9 | creuse | cubique |
| Q-ZrO₂ | 0,4 | creux | quadratique |
| Q-ZrO₂ | 0,6 | dense | quadratique |
| h-ZnO:Al | 1 | creux | hexagonal |
| h-ZnO:Al | 1 | creux | hexagonal |
| C Y₂0₃ | 0,6 | creux | Cubique |
| C-MgO | 1,9 | creux | cubique |
| C-Y₂O₃:Eu | 0,5 | creux | Cubique |
| C_Y₂O₃:Er:Eu:Yb | 0,6 | creux | cubique |
| C-Ce0₂ | 0,7 | creux | Cubique |
| YSZ = Yttria-stabilized zirconia | 0,7 | creuse | quadratique |
| YSZ = Yttria-stabilized zirconia | 0,6 | dense | quadratique |
| C-CCTO =CaCu₃Ti₄O₁₂ | 0,3 | dense | Cubique |
| Bio-SiO₂ | 1 | meso | amorphe |
| Q-ZrO₂ | 0,6 | méso | quadratique |
| c-BaTiO₃ | | non mesuré | Cubique |

**Tableau 3**

| | | | |
|---|---|---|---|
| α-Fe₂0₃ | 1 | *dense* | *hématite* |
| O-MgSO4 | 1,5 | *creuse* | *Orthorombique* |
| C-ZMFO (Zn_{0,18}Mn_{0,82}Fe₂O₄) | 1,5 | *dense* | *Cubique* |
| M-Mn₂P₂O₇ | 0,8 | *dense* | *monoclinique* |
| NiMnOxyde | 0,8 | *dense* | *mélange* |
| Mullite (SiO₂, Al₂O₃) | | *creuse* | *non mesuré* |
| Fe₃O₄ | | *non mesuré* | *non mesuré* |
| ZnFe₂O₄ | | *non mesuré* | *non mesuré* |
| MnFe₂O₄ | | *non mesuré* | *non mesuré* |
| NiFe₂O₄ | | *non mesuré* | *non mesuré* |
| CoFe₂O₃ | | *non mesuré* | *non mesuré* |
| MgAl₂O₄ | | *non mesuré* | *non mesuré* |
| Y₃Al₅O₁₂ | | *non mesuré* | *non mesuré* |

Les valeurs de tailles dans le tableau 3 sont obtenues par étude statistique sur des images de microcopie électronique. La surface spécifique BET de la poudre obtenue TiO2 rutile est de 47 m²/g. La surface spécifique BET de la poudre obtenue TiO2 anatase est de 198 m²/g. La surface spécifique BET de la poudre obtenue ZnO Wurtzite (ou encore appelée h-ZnO dans le tableau 3 ) est de 39 m²/g,

### Exemple 8 : Incorporation des particules obtenues à l'exemple 2 dans une matrice de polyéthylène

Les particules de boehmite obtenues selon l'exemple 2 sont introduites dans une matrice de polyéthylène par extrusion-compoundage. L'extrudeuse est une bi-vis corotative de Clextral modèle EVOLUM HT 32 avec un L/D = 44 et un diamètre de vis de 32 mm. Les proportions sont les suivantes : 80% de polyéthylène, 20% de particules de boehmite en masse. Le profil de température de l'extrusion est le suivant :

| | F | Z11 | Z10 | Z9 | Z8 | Z7 | Z6 | Z5 | Z4 | Z3 | Z2 | Z1 |
|---|---|---|---|---|---|---|---|---|---|---|---|---|
| T°C consigne | 180 | 180 | 180 | 180 | 180 | 180 | 180 | 180 | 170 | 150 | 100 | 15 |
| T°C réelle | 178 | 178 | 182 | 185 | 180 | 181 | 181 | 182 | 169 | 154 | 100 | 15 |

La vitesse de vis est de 250 tours/min, le couple moteur de 44%, la pression en tête est de 40 bar, la température de la matière est à 180°C et le séchage est effectué à 50°C pendant 4 heures.

La figure 10 présente des images de MEB des particules de boehmite selon l'invention au sein de la matrice de polyéthylène.

### Exemple 9 : Incorporation de particules obtenues à l'exemple 4 dans une matrice

Les particules de cuivre métallique obtenues à l'exemple 4 ont été dispersées en proportion de 58% en poids dans une matrice aqueuse comprenant notamment 13% d'alcool (éthanol ou éthylène glycol + acide citrique).

Le protocole est le suivant :
- La surface des particules de cuivre est lavée : les particules de cuivre sont mises en suspension dans une solution concentrée d'acide citrique pendant 24 heures à température ambiante. Les particules sont ensuite filtrées et mise en suspension dans une solution d'éthanol et d'acide citrique pendant 24 heures à température ambiante. Les particules sont filtrées et séchées.
- Les particules sont dispersées mécaniquement dans l'éthanol afin d'obtenir une pâte. Celle-ci est mélangée à la solution aqueuse.

La solution finale obtenue est constituée de 58 % en poids de particules de cuivre, 13 % en poids de solution alcoolique (par exemple 90 % éthanol+10 % d'acide citrique en poids) et 29 % en poids de solution aqueuse.

### Exemple 10 : Incorporation de particules de ZrO₂ creuses dans une matrice d'émail

Des particules de ZrO₂ creuses selon l'invention ont été dispersées dans une matrice d'émail en barbotine aqueuse selon le protocole suivant :
1/ Pré-dispersion des particules creuses en solution aqueuse : les particules creuses sont mises en suspension dans une solution aqueuse. La proportion de particules creuses peut varier entre 50% et 90 % en masse de matière solide.
2/ Pré-dispersion de la poudre d'émail en solution aqueuse. La proportion de poudre d'émail peut varier entre 50% et 90 % en masse de matière solide.
3/ La suspension de particules creuses est ajoutée sous agitation mécanique à la barbotine d'émail. Cette barbotine peut être constituée au final de 30 % à 60 % en masse de matière solide et 40 % à 70 % en masse de solution aqueuse.

La barbotine obtenue peut être déposée sur substrat métallique par projection. Le substrat, revêtu d'émail, est séché sous air vers 100°C puis subit une cuisson à haute température (entre 800 et 1000°C) selon la qualité de l'émail.

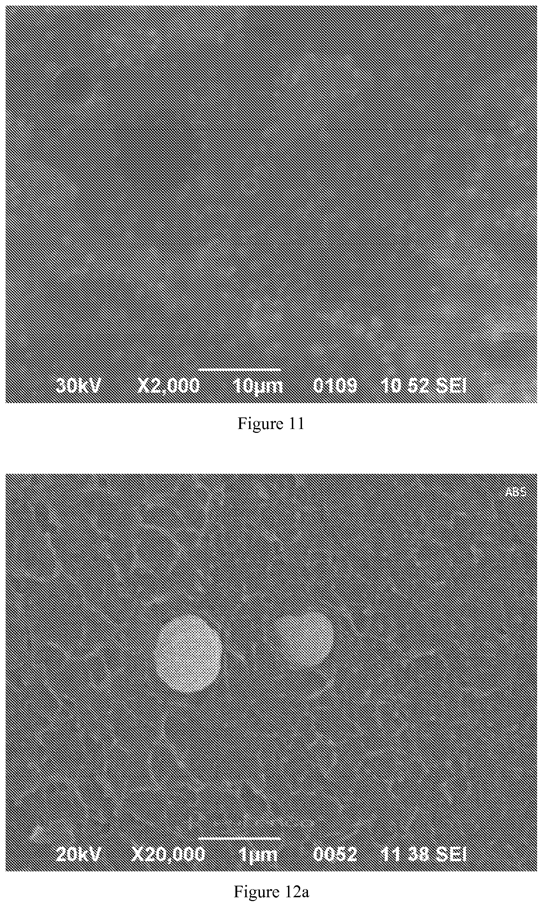

La figure 11 présente une image de MEB d'une matrice d'émail dense contenant 20 % de particules creuses d'oxyde de zirconium déposée par projection sur un substrat acier.

### Exemple 11 : Incorporation de particules de ZnO denses dans une matrice d'ABS

La figure 12 est une image de MEB de particules de ZnO denses selon l'invention incorporées dans une matrice d'ABS (Acrylonitrile Butadiène Styrène).

## Revendications

1. Procédé de préparation d'un ensemble de particules inorganiques, sphériques, micrométriques, et individualisées, par pyrolyse d'aérosol, comprenant la mise en oeuvre d'étapes suivantes, dans un réacteur :
- la nébulisation à une température de 10 à 40 °C d'une solution liquide contenant un précurseur du ou des matériaux inorganiques duquel ou desquels on veut former des particules à une concentration molaire donnée dans un solvant, de sorte à obtenir un brouillard de gouttelettes de solution,
- le chauffage du brouillard à une température apte à assurer l'évaporation du solvant et la formation de particules, à une température de 40 à 120 °C,
- le chauffage de ces particules à une température de 120 à 400 °C, apte à assurer la décomposition du précurseur pour former le matériau inorganique,
- optionnellement la densification des particules à une température entre 200 et 1000°C,
- éventuellement la trempe des particules, et
- la récupération des particules ainsi formées.

2. Procédé selon la revendication 1, dans lequel l'étape (1) de nébulisation est réalisée pendant une durée inférieure ou égale à 10 secondes, en particulier inférieure ou égale à 5 secondes.

3. Procédé selon la revendication 1 ou 2, dans lequel l'étape (2) de chauffage est réalisée pendant une durée inférieure ou égale à 10 secondes, en particulier comprise entre 1 et 10 secondes.

4. Procédé selon l'une des revendications 1-3, dans lequel l'étape (3) de pyrolyse est réalisée pendant une durée inférieure ou égale à 30 secondes, en particulier comprise entre 10 et 30 secondes.

5. Procédé selon l'une des revendications 1-4, dans lequel l'étape (4) de densification est réalisée pendant une durée inférieure ou égale à 30 secondes, en particulier comprise entre 20 et 30 secondes.

6. Procédé selon l'une des revendications 1-5, dans lequel l'étape de récupération est réalisée à une température inférieure à 100 °C, et de préférence pendant une durée inférieure ou égale à 10 secondes, en particulier inférieure ou égale à 5 secondes.

7. Procédé selon l'une des revendications 1-6, dans lequel l'étape de trempe est réalisée par entrée d'un gaz, de préférence de l'air, froid sur tout ou partie de la circonférence du réacteur.

8. Procédé de préparation d'un matériau comprenant un ensemble de particules dispersées, comprenant la mise en contact d'une matrice avec au moins un ensemble de particules obtenu selon le procédé de l'une quelconque des revendications 1 à 7.

9. Procédé selon la revendication 8, comprenant en outre une étape de mise en forme du matériau.

10. Ensemble de particules inorganiques, sphériques, micrométriques, et individualisées, **caractérisé en ce que** les particules ont :
- un diamètre moyen en nombre compris entre 0,5 et 5 µm,
- un coefficient de sphéricité supérieur ou égal à 0,85, et
- une surface spécifique supérieure ou égale à 15 m²/g,
où les particules sont des particules de ZnO, des particules d'alumine, des particules de boehmite, des particules d'oxyde de cuivre, des particules d'oxyde de titane, des particules d'oxyde mixte de titane et silicium, des particules de montmorillonite, des particules d'hydrotalcite, des particules de dihydroxyde de magnésium, des particules d'oxyde de magnésium, des particules de dioxyde de zirconium, des particules d'oxyde d'yttrium Y₂O₃, des particules de dioxyde de cérium, des particules de zircone stabilisée à l'yttrium, des particules de CaCu₃Ti₄O₁₂, des particules de BaTiO₃, des particules d'oxyde de fer, des particules de sulfate de magnésium, des particules de Zn_{0,18}Mn_{0,82}Fe₂O₄, des particules de Mn₂P₂O₇, des particules d'oxyde de nickel manganèse, des particules de mullite, des particules de ZnFe₂O₄, des particules de MnFe₂O₄, des particules de NiFe₂O₄, des particules de CoFe₂O₃, des particules de MgAl₂O₄, ou des particules de Y₃Al₅O₁₂.

11. Ensemble de particules selon la revendication 10, dans lequel les particules sont des particules de MgO, de ZnO, de ZrO2 stabilisées à l'yttrium, de Mullite (SiO2/Al2O3), ou de telles particules dopées.

12. Matériau comprenant un ensemble de particules selon la revendication 10 ou 11 dispersées de façon homogène dans une matrice.

## Patentansprüche

1. Verfahren zur Herstellung eines Satzes anorganischer, sphärischer, mikrometrischer und individualisierter Partikel durch Aerosolpyrolyse, umfassend die Durchführung der folgenden Schritte in einem Reaktor:
- die Zerstäubung einer flüssigen Lösung bei einer Temperatur von 10 bis 40 °C, die einen Vorläufer von einem der anorganischen Materialien, aus dem/denen man Partikel bilden möchte, in einer bestimmten molaren Konzentration in einem Lösungsmittel enthält, um einen Tröpfchennebel zu erhalten der Lösung,
- Erhitzen des Nebels auf eine Temperatur, die die Verdampfung des Lösungsmittels und die Bildung von Partikeln gewährleistet, bei einer Temperatur von 40 bis 120 °C,
- Erhitzen dieser Partikel auf eine Temperatur von 120 bis 400 °C, die die Zersetzung des Vorläufers unter Bildung des anorganischen Materials gewährleisten kann,
- optional die Verdichtung der Partikel bei einer Temperatur zwischen 200 und 1000 °C,
- gegebenenfalls Abschrecken der Partikel und
- Wiedergewinnen der so gebildeten Partikel.

2. Verfahren nach Anspruch 1, bei dem der Vernebelungsschritt (1) für eine Dauer kleiner oder gleich 10 Sekunden, insbesondere kleiner oder gleich 5 Sekunden, durchgeführt wird.

3. Verfahren nach Anspruch 1 oder 2, bei dem der Erwärmungsschritt (2) für eine Dauer kleiner oder gleich 10 Sekunden, insbesondere zwischen 1 und 10 Sekunden, durchgeführt wird.

4. Verfahren nach einem der Ansprüche 1-3, bei dem der Pyrolyseschritt (3) für eine Dauer kleiner oder gleich 30 Sekunden, insbesondere zwischen 10 und 30 Sekunden, durchgeführt wird.

5. Verfahren nach einem der Ansprüche 1-4, bei dem der Verdichtungsschritt (4) für eine Dauer kleiner oder gleich 30 Sekunden, insbesondere zwischen 20 und 30 Sekunden, durchgeführt wird.

6. Verfahren nach einem der Ansprüche 1-5, bei dem der Wiedergewinnungsschritt bei einer Temperatur von weniger als 100 °C und vorzugsweise für eine Dauer von weniger als oder gleich 10 Sekunden, insbesondere weniger als oder gleich 5 Sekunden, durchgeführt wird.

7. Verfahren nach einem der Ansprüche 1-6, bei dem der Schritt des Abschreckens durch Einleiten eines kalten Gases, vorzugsweise Luft, über den gesamten oder einen Teil des Umfangs des Reaktors erfolgt.

8. Verfahren zur Herstellung eines Materials, das einen Satz dispergierter Partikel umfasst, umfassend das In-Kontakt-Bringen einer Matrix mit mindestens einem Satz von Partikeln, die gemäß dem Verfahren nach einem der Ansprüche 1 bis 7 erhalten wurden.

9. Verfahren nach Anspruch 8, weiterhin umfassend einen Schritt des Formens des Materials.

10. Satz von anorganischen, sphärischen, mikrometrischen und individualisierten Partikeln, **dadurch gekennzeichnet, dass** die Partikel Folgendes aufweisen:
- einen Durchmesser im zahlenmäßigen Durchschnitt zwischen 0,5 und 5 µm,
- einen Sphärizitätskoeffizienten größer oder gleich 0,85 und
- eine spezifische Oberfläche von mehr oder gleich 15 m²/g,
wobei es sich bei den Partikeln um ZnO-Partikel, Aluminiumoxidpartikel, Böhmitpartikel, Kupferoxidpartikel, Titanoxidpartikel, Mischoxidpartikel aus Titan und Silizium, Partikel aus Montmorillonit, Hydrotalcitpartikel, Magnesiumdihydroxidpartikel, Magnesiumoxidpartikel, Zirkoniumdioxidpartikel, Yttriumoxid Y₂O₃-Partikel, Cerdioxid-Partikel, Yttrium-stabilisierte Zirkonoxi-Partikel, CaCu₃Ti₄O₁₂-Partikel, BaTiO₃-Partikel, Eisenoxid-Partikel, Magnesiumsulfat-Partikel, Zn_{0,18}Mn_{0,82}Fe₂O₄-Partikel, Mn₂P₂O₇-Partikel, Nickel-Manganoxid, Mullit-Partikel, ZnFe₂O₄-Partikel, MnFe₂O₄-Partikel, NiFe₂O₄-Partikel, CoFe₂O₃-Partikel, MgAl₂O₄-Partikel oder Y₃Al₂O₁₂-Partikel handelt.

11. Satz von Partikeln nach Anspruch 10, wobei die Partikel aus MgO, aus ZnO, aus Yttrium-stabilisierten ZrO₂, aus Mullit (SiO₂/Al₂O₃) oder derart dotierte Partikel sind.

12. Material, umfassend einen Satz von Partikeln nach Anspruch 10 oder 11, die homogen in einer Matrix dispergiert sind.

## Claims

1. A process for preparing a set of particles, by aerosol pyrolysis, wherein the particles are spherical, inorganic, micrometric, and individualised, comprising the following steps, in a reactor:
- nebulization at a temperature of 10 to 40 °C of a liquid solution containing a precursor to one or more inorganic material(s), from which the particles are to be formed, at a given molar concentration in a solvent, which is used to obtain a spray of droplets of the solution,
- heating of the spray to a temperature sufficient to ensure the evaporation of the solvent and the formation of particles, at a temperature of 40 to 120°C,
- heating of the particles to a temperature of 120 to 400°C sufficient to ensure the decomposition of the precursor to form the inorganic material,
- optionally, densification of the particles at a temperature between 200 and 1000°C,
- optionally, quenching of the particles, and
- recovery of the particles thus formed.

2. The process according to claim 1, wherein step (1) of nebulization is performed for a duration less than or equal to 10 seconds, in particular, less than or equal to 5 seconds.

3. The process according to claim 1 or 2, wherein step (2) of heating is carried out for a period less than or equal to 10 seconds, in particular between 1 and 10 seconds.

4. The process according to anyone of claims 1-3, wherein step (3) of heating, referred to as pyrolysis, is carried out for a period less than or equal to 30 seconds, in particular between 10 and 30 seconds.

5. The process according to anyone of claims 1-4, wherein step (4) of densification is carried out for a duration less than or equal to 30 seconds, in particular between 20 and 30 seconds.

6. The process according to anyone of claims 1-5, wherein the step of recovery is carried out at a temperature below 100°C, and preferably for a period less than or equal to 10 seconds, in particular, less than or equal to 5 seconds.

7. The process according to anyone of claims 1-6, wherein the quenching step is carried out by the input of a gas, preferably cold air, to all or part of the circumference of the reactor.

8. A process for preparing a material comprising a dispersed set of particles , comprising contacting a matrix with at least one set of particles as prepared according to any one of Claims 1 to 7.

9. The process according to Claim 8, further comprising a forming step for the material.

10. A set of spherical, inorganic, micrometric, and individualised particles, **characterized in that** the particles have:
- a diameter of between 0.5 and 5 micrometres;
- a coefficient of sphericity of greater than or equal to 0.85; and
- specific surfaces greater than or equal to 15m²/g,
wherein the particles are ZnO particles, alumina particles, boehmite particles, copper oxide particles, titanium oxide particles, mixed titanium and silicon oxide particles, montmorillonite particles, hydrotalcite particles, magnesium dihydroxide particles, magnesium oxide particles, zirconium dioxide particles, particles of yttrium oxide Y₂O₃, Cerium dioxide particles, particles of zirconia stabilized with yttrium, particles of CaCu₃Ti₄O₁₂, particles of BaTiO₃, iron oxide particles, magnesium sulphate particles, particles of Zn_{0.18}Mn_{0.82}Fe₂O₄, Mn₂P₂O₇ particles, nickel manganese oxide particles, mullite particles, particles of ZnFe₂O₄, particles of MnFe₂O₄, particles of NiFe₂O₄, particles of CoFe₂O₃, particles of MgAl₂O₄, or particles of Y₃Al₅O₁₂.

11. The set of particles according to claim 10, wherein the particles are particles of MgO, ZnO, ZrO₂ stabilized with yttrium, Mullite (SiO2/Al2O3), or of such particles having been doped.

12. A material comprising a set of particles according to claim 10 or 11 homogeneously dispersed within a matrix.
